# EUROPEAN PATENT SPECIFICATION

(11) **EP 3 148 158 B1**
(45) Date of publication and mention of the grant of the patent: **10.04.2019**
(21) Application number: 15306500.8
(22) Date of filing: 25.09.2015
(51) Int. Cl.: H04L 29/08, G06F 11/34, G06Q 20/32, G06Q 20/10

(54) **MONITORING A TRANSACTION AND APPARATUS FOR MONITORING A MOBILE PAYMENT TRANSACTION**
VORGANGSÜBERWACHUNG UND EIN WERKZEUG ZUR ÜBERWACHUNG EINER MOBILEN ZAHLUNGSTRANSAKTION
SURVEILLANCE DE TRANSACTION ET UN OUTIL POUR SURVEILLER UNE TRANSACTION DE PAIEMENT MOBILE

(43) Date of publication of application: 29.03.2017
(73) Proprietor: MasterCard International Incorporated, Purchase, NY 10577 (US)
(72) Inventor: du Chéné, Arnaud, 1180 Brussels (BE); Venot, Claire, 78210 SAINT-CYR-L'ECOLE (FR); Bacioccola, Andrea, London, E1W 1UB (GB); Hamdan, Husham, Croydon, CR0 5BP (GB); Duffy, Colum, Twickenham, TW9 2JE (GB)
(74) Representative: Lawrence, Richard Anthony

(56) References cited:
- WO-A1-2015/009528
- WO-A2-2012/075526
- US-A1- 2005 080 661
- US-A1- 2011 098 973
- US-A1- 2015 046 323

## Description

### Field of Invention

This disclosure relates generally to mobile application performance, and to monitoring of mobile applications to determine performance and interoperability metrics. In embodiments, it relates to payment applications in use on mobile computing devices such as telephone handsets and tablet computers.

### Background of Invention

This disclosure relates to mobile applications - applications performed on a mobile computing device. It has particular relevance to payment applications used to enable a mobile computing device to perform as a payment device and a payment management device, emulating and expanding the functionality of a conventional payment card.

Payment cards such as credit cards and debit cards are very widely used for all forms of financial transaction. The use of payment cards has evolved significantly with technological developments over recent years. Originally, transactions were on paper, using an imprint of a transaction card and confirmed by a signature. This approach was largely replaced by use of a magnetic stripe of a transaction card swiped through a magnetic stripe reader on a point of sale (POS) terminal to perform a transaction. Transaction cards developed to contain an integrated circuit ("chip cards" or "smart cards") communicate with a smart card reader in the POS terminal. Using this approach, a transaction is typically confirmed by a personal identification number (PIN) entered by the card user. Cards of this type typically operate under the EMV standard for interoperation of chip cards and associated apparatus (such as POS terminals and ATMs). ISO/IEC 7816 provides a standard for operation of cards of this type. Technology has further developed to provide payment cards which operate contactlessly - under EMV, these are covered under the ISO/IEC 14443 standard. Using such cards, the account number can be read automatically from the card by a POS terminal, generally using a short range wireless technology such as Radio Frequency Identification (RFID) - this approach is generally referred to as "contactless" or "proximity" payment. This is typically enabled by embedding of a chip in a card body together with a suitable antenna to allow transmission and receipt of wireless signals - the transmissions may be powered by a radio frequency interrogation signal emitted by a proximity reader in the POS terminal. For an effective connection to be made, the payment card may need to be brought into very close proximity to the proximity reader - this has security benefits and prevents confusion if there are multiple enabled payment cards in the general vicinity of the proximity reader, as will typically be the case in a retail establishment for example. This may be achieved by tapping the antenna of the payment card against the proximity reader of the POS terminal.

It has now been appreciated that it would be possible to use a computing device such as a mobile telephone as a proxy for a payment card, particularly a payment card for contactless and Internet-based transactions. For example, the present applicants have developed a mobile payment application, Mobile PayPass_{™}, which can be downloaded to a mobile cellular telephone handset (hereafter "mobile phone") to act as a proxy for a payment card using Near Field Communication (NFC) technology standards, which are built in to the majority of current mobile phones. NFC is a development upon RFID, and NFC-enabled devices are able to operate in the same manner as RFID devices - though an NFC-device is active rather than passive, as it is powered by the mobile phone battery rather than relying on inductive pickup from a reader device. Using Mobile PayPass_{™}, a user can conduct tapping based transactions with a proximity reader, as well as perform account management operations over an appropriate network interface (cellular, local wireless network) in an online banking interface with the user's account provider. A user will now commonly use his or her mobile phone in obtaining banking services, both in mobile payment (such as by use of Mobile PayPass_{™}) and to conduct online banking.

The user experience for a user using a mobile payment application is different from that of the user of a conventional payment card interacting with a transaction processing system through a terminal (such as a merchant point of sale - POS - terminal). The performance of the overall transaction processing system may be different for such users, and there may also be issues between users of different devices and in connection with different types of network. At present, performance differences for different users and user types are not considered effectively in monitoring the performance of the transaction processing system, as such monitoring is generally confined to the transaction processing part of the transaction processing system under the direct control of the transaction processing system operator. Evaluation of performance and interoperability issues for users is typically carried out by testers performing the role of users - obtaining significant data by this approach is labour intensive and consequently expensive.

Various approaches are used in other contexts to determine user experience. US 2005/080661 describes determination whether a web service provided to a user meets business process requirements met in a service level agreement, and WO 2012/075526 describes a system for evaluating user experience on a mobile device by allowing emulation of a mobile user interface on a management system. Neither approach relates to performance monitoring of a transaction event in a complex system involving multiple computing devices interacting with each other to perform a transaction process. Even providing satisfactory transaction records can prove challenging - WO 2015/009528 is directed specifically to reporting on contactless transactions by integrating transaction record data held by different systems.

The issue of effective performance monitoring arises for payment applications interacting with a transaction processing system, but also in other types of mobile applications that interact with a separate system (for example, in mobile ticketing). It would be desirable to use the functionality available on a mobile computing device to provide effective performance and interoperability monitoring.

### Summary of Invention

In a first aspect, the disclosure provides a method of monitoring performance for transactions performed by a mobile computing device with a terminal of a transaction system, comprising a computer implemented monitoring service for a set of performance metrics related to the transactions, wherein for each transaction a plurality of transaction stages are defined: for each of one or more transactions, receiving values for a first set of performance metrics of the set of performance metrics for that transaction from the mobile computing device where values for the first set of performance metrics had been measured or recorded, the first set of metrics relating to transaction stages comprising interaction between the mobile computing device and the terminal with the first set of metrics comprising transaction timing and reasons for transaction failure, and receiving values for a second set of performance metrics of the set of performance metrics for that transaction from a transaction management system of the transaction system where values for the second set of performance metrics had been measured or recorded, the second set of performance metrics relating to stages of the transaction performed remotely from the mobile computing device; and providing a report on the set of performance metrics for said one or more transactions.

Performance metrics as defined here may include metrics relating to interoperability as well as to the performance of any specific part of the transaction system or mobile computing device. Transaction performance can as a result of this approach be monitored effectively for transactions performed in a transaction system involving use of mobile computing devices. Effective monitoring is achievable as data from the mobile computing device can be combined with data for the transaction system to allow an effective understanding of performance across the whole transaction.

In embodiments, the transaction system may be a financial transaction system and the mobile computing device may be a payment device.

There set of performance metrics may include information relating to the performance of each transaction stage.

The set of performance metrics may includes metrics relating to one or more of the following: network performance, transaction authorisation, transaction values and a transaction context.

In a second aspect, there is provided a monitoring service adapted to perform the method as set out above, the monitoring service comprising a programmed processor to integrate performance metrics for transactions and to provide reports and a memory for storing sets of performance metrics for transactions.

In a third aspect, there is provided a method of monitoring performance of a transaction performed on a mobile computing device with a transaction system, the mobile computing device using an application to interact with a terminal of the transaction system, wherein for each transaction a plurality of transaction stages are defined, the mobile computing device having a first set of performance metrics for performance of a transaction, the first set of metrics relating to transaction stages comprising interaction between the mobile computing device and the terminal with the first set of metrics comprising transaction timing and reasons for transaction failure , the method comprising in performing a transaction, the application measuring or recording values of the performance metrics of the first set of metrics for that transaction; and the mobile computing device providing the measured or recorded values of the performance metrics of the first set of performance metrics for that transaction to a monitoring service external to the mobile computing device for reconciliation with a second set of performance metrics relating to stages of the transaction performed remotely from the mobile computing device.

The method may then comprise measuring the performance of each transaction stage during the said instance of performing the application.

The performance metrics of that instance may be uploaded together with performance metrics for other transactions in a scheduled interaction with the monitoring service.

The application may be a mobile payment application and wherein the instance of the application may relate to a financial transaction. This financial transaction may be performed between the mobile computing device and a terminal, wherein the set of performance metrics may include information relating to the terminal involved in that transaction. The set of performance metrics may include metrics relating to one or more of the following: network performance, transaction authorisation, transaction values and a transaction context.

In a fourth aspect, the invention provides a mobile computing device having a programmed processor adapted to perform the method of the third aspect of the invention.

This mobile computing device may be a payment device adapted to transact with a digitized payment card. In this case, the mobile computing device may be adapted to perform a contactless transaction with a terminal, and wherein the set of performance metrics may comprise metrics relating to networking between the mobile computing device and the terminal.

### Brief Description of Figures

Embodiments of the invention will now be described, by way of example, with reference to the accompanying Figures, of which:
Figure 1 shows schematically relevant parts of a representative transaction system suitable for implementing an embodiment of the disclosure;
Figures 2a and 2b illustrate schematically relevant functions of a user mobile phone and transaction monitoring server suitable for implementing an embodiment of the disclosure;
Figure 3 shows a method of monitoring performance according to a broad aspect of the disclosure for a transaction performed by a mobile computing device with a transaction system;
Figure 4 shows key timing points in the course of a mobile transaction;
Figure 5 shows a system for mobile transaction monitoring according to an embodiment of the invention;
Figure 6 shows functional elements of a software system on a mobile device adapted for transaction monitoring in accordance with an embodiment of the invention;
Figure 7 shows functional elements of a mobile payment infrastructure suitable for use with embodiments of the invention;
Figure 8 shows a software system on a mobile device providing a mobile payment application as shown in Figure 7 with associated; and
Figure 9 shows a method of monitoring performance according to an aspect of the disclosure of an application on a mobile computing device.

### Description of Specific Embodiments

Specific embodiments of the invention will be described below with reference to the Figures.

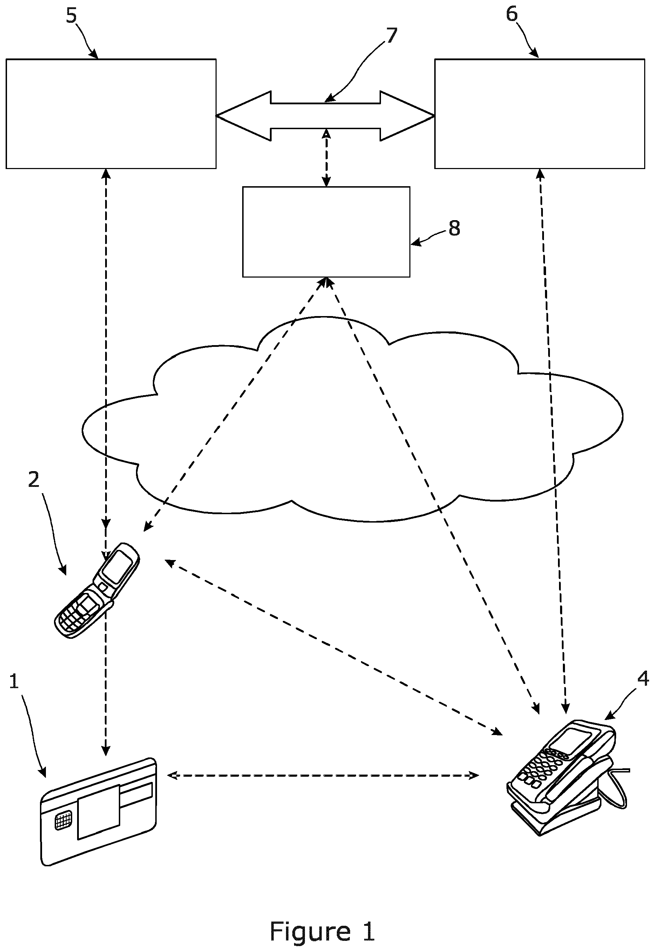

Figure 1 shows schematically relevant parts of a representative transaction system suitable for implementing an embodiment of the disclosure.

A user (not shown) is provided with a payment device - in the embodiment shown, this is a mobile phone 2 acting as a proxy for a payment card 1 (the proxy can be for a physical card, or the payment card may be virtual only - either will be referred to below as a "digitized card") through use of a payment application. In other embodiments, other types of computing device may be used as the payment device. Such computing devices will have processors and memories for storing information including firmware and applications run by the respective processors, in this case one of the applications being a payment application. Payment devices will typically be equipped with means to communicate with other elements of a payment infrastructure. These communication means may comprise antennae and associated hardware and software to enable communication by NFC and associated contactless card protocols such as those defined under ISO/IEC 14443, or they may comprise an antenna and associated hardware and software to allow local wireless networking using 802.11 protocols or any appropriate alternative.

Other computer equipment in a conventional infrastructure is typically fixed, but in cases of interest point of interaction (POI) terminals 4 may also be mobile. The example shown is a mobile point-of-sale (MPOS) terminal used by a merchant interacting with the user. Such equipment is typically connected or connectable to an acquiring bank 6 or other system in a secure way (either through a dedicated channel or through a secure communication mechanism over a public or insecure channel). There may also be a mechanism to allow connection between the user computer devices and a card issuing bank 5 or system associated with the user. A banking infrastructure 7 will also connect the card issuer 5 and the acquiring bank 6, allowing transactions to be carried out between them.

Associated with the banking infrastructure 7 there are also one or more infrastructure servers 8 (while represented here as a single server, this may of course comprise any appropriate computer system or set of computer systems). The infrastructure server 8 may be considered a part of the banking infrastructure 7 - it is either integral with it or bound to it in a close trust relationship, so that the banking infrastructure 7 can effectively warrant that communications by other parties with the infrastructure server 8 can be trusted. This means that if the other party trusts the banking infrastructure 7, then the other party should also trust the infrastructure server 8. The infrastructure server 8 is shown as interacting with both the user mobile phone 2 and other elements of the banking infrastructure.

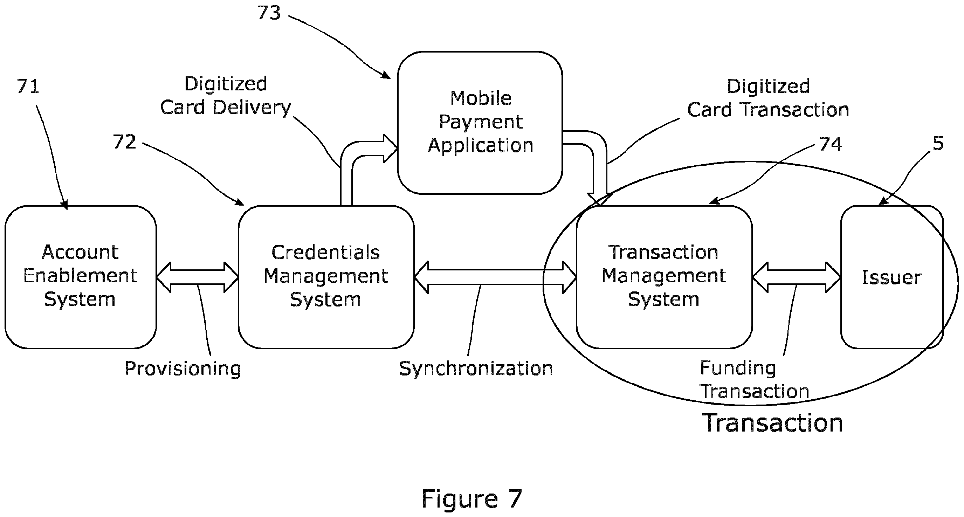

Figure 7 shows in more detail the functional roles assumed by system components in an exemplary internet supported ("cloud based") infrastructure for mobile payments using a digitized card. These functional roles are described below.

The Account Enablement System (AES) 71 may be provided by the card issuer or by a service associated with the card issuer. The AES 71 is responsible for card setup and establishment of the user and card on the system - it is responsible for the user (cardholder) onboarding process, the cardholder identification and verification process (ID&V) and the card digitization process.

The Credentials Management System (CMS) 72 is responsible for remote management of the Mobile Payment Application (MPA) 73. This encompasses the delivery of payment credentials such as card profiles and keys necessary to support transactions. It also covers remote management functions that can be triggered internally or by other system elements. The CMS 72 also has responsibility for replenishment of the MPA 73 (for example, to ensure that it has a sufficient supply of single-use keys to allow it to continue to perform payment transactions).

The Transaction Management System (TMS) 74 is provided by the elements of the transaction infrastructure together responsible for the approval of a transaction using a digitized card. The TMS 74 interacts with the issuer 5 for the financial part of the authorization process in the same manner as for a conventional transaction infrastructure, the issuer being responsible for the approval of a transaction.

The MPA 73 enables a user to interact with a digitized card, both for card management and to perform a contactless transaction at a POS terminal or a remote payment transaction using the network connectivity of the mobile device on which the MPA is installed. Payment credentials are received in digitized form and are stored encrypted on the mobile device.

There is a synchronization link between the CMS 72 and the TMS 74 to monitor transactions performed over the system. The link is used not only to exchange information but also to support a set of rules to trigger provisioning of resources to the MPA 73 and to inhibit or terminate operation of a digitized card if required. This link can also be used to support fraud detection.

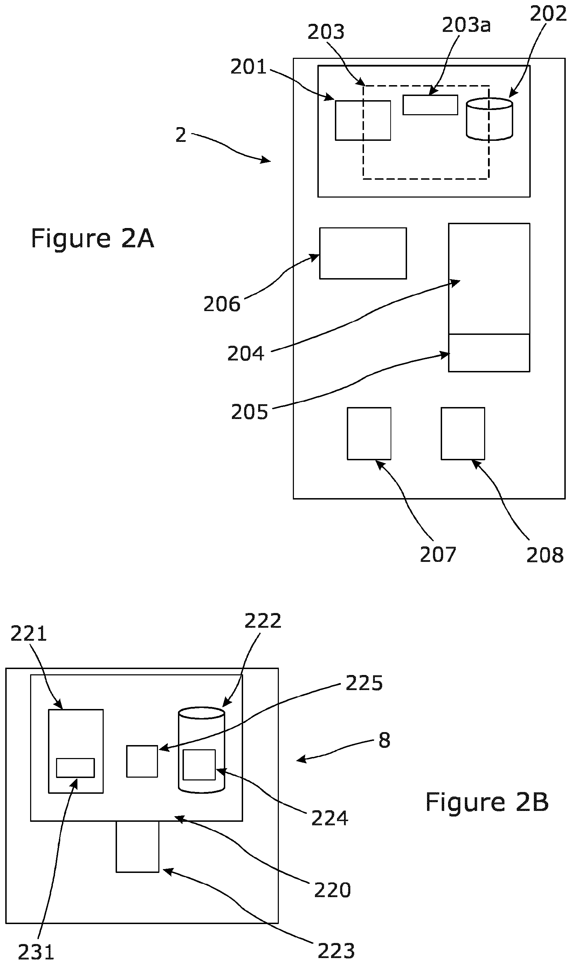

Figures 2a and 2b illustrate schematically relevant functions of a user mobile phone 2 and a typical infrastructure server 8.

Figure 2a shows a mobile phone 2, though it should be noted that any other portable computing apparatus such as a laptop, notebook, tablet computer or wearable computer can be used as computing apparatus in embodiments of the invention. The mobile phone comprises a processor 201 and a memory 202, such that the memory stores and the processor will subsequently run applications (shown generally as application space 203) such as a payment application 203a. The mobile phone has a user interface comprising a display 204 and a touchscreen 205 (or other input device) and associated drivers to allow a user to enter data into and view information from the applications 203. The mobile phone 2 also has a cellular telecommunications capability, including subscriber information module 206 and wireless communication element 207 together providing the ability to connect to a cellular communications network. The mobile phone may need to perform cryptographic operations in order to interact securely with a POS terminal - this may be achieved by a cryptographic capability within the subscriber information module 206, such as a cryptographic processor in a tamperproof secure element - another approach is to manage without a secure element by using Host Card Emulation (HCE). Implementation of HCE in Android is discussed at
https://developer.android.com/guide/topics/connectivity/nfc/hce.html- other operating systems are developing or have developed similar approaches. The mobile phone is here shown as having a local networking element 208 as well, in order to establish a short range wireless network connection - however, in other embodiments the mobile phone 2 may only be able to make network connections through a cellular telecommunications network. Where the computing device is not a mobile phone, then while a network connection is needed to enable communication between the computing device and other system elements, this need not involve cellular telecommunications. For example, the computing device may be a tablet computer without cellular telecommunications capability but capable of making a local wireless network connection.

Figure 2b describes elements of an infrastructure server 8. This is shown as comprising a server 220 with processor 221 and memory 222, with associated communications functionality 223. The communications functionality may include networking capability allowing communication with the payment network infrastructure 7, optionally there may be a telecommunications capability allowing communication over a telecommunications network with the mobile phone 2 and the MPOS terminal 4, although such communication may be entirely over data networks in which case no telecommunications capability at the mobile services server 8 would be required. The processor 221 is a representation of processing capability and may in practice be provided by several processors. The server provides applications 225 stored in the memory 222 and run on the processor 221, the memory 222 also storing databases 224. In embodiments, a cryptographic processor 231 may be used to generate keys for provisioning a mobile payment application.

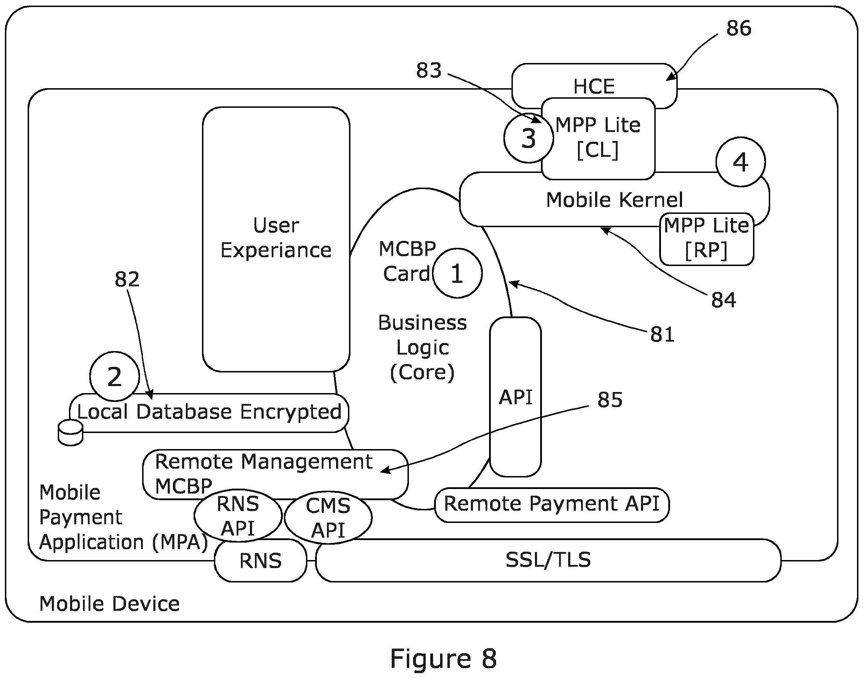

The mobile payment application (MPA) as shown in Figure 7 is illustrated functionally in Figure 8.

The central business logic 81 is responsible for the overall management of the digitized card. Sensitive data is stored in a local database encrypted (LDE) 82. This will include payment credentials and any sensitive assets, and is configured so that information is held securely but retrievable as necessary for use or management of the digitized card. The LDE 82 may be implemented either in a secure element (such as a SIM card) or by a technology such as Trusted Execution Environment(TEE). Core payment functions 83 are here provided by MPP Lite (in the case of the applicant, this provides a software implementation of the M/Chip Mobile functionality). A payment capabilities library 84 is provided by the mobile kernel to support remote payment.

The MPA stores single usage payment credentials locally, allowing it to conduct contactless transactions without need for connectivity to the CMS. The MPA does have a remote management system 85 for communication with the CMS when management is required, and also supports the business logic of the MPA to answer any callback request from the CMS. Such interaction of course requires appropriate network connectivity. This implementation comprises an HCE implementation 86 - this handles the connection between the MPA and the NFC controller and routing of communications between them. The user experience 87 comprises the user interface.

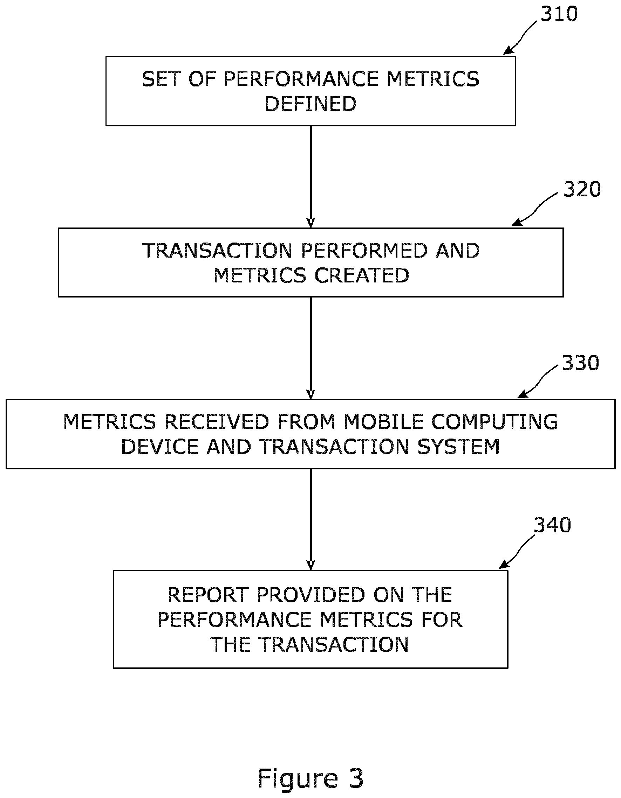

Figure 3 describes a method of monitoring performance and interoperability for a transaction performed by a mobile computing device with a transaction system according to one broad aspect of the disclosure.

A set of performance metrics are defined 310. When a transaction is performed 320, the set of performance metrics is received 330 partly from the mobile computing device and partly from the transaction system - particular metrics have been measured in each. A report is then provided 340 on the set of performance metrics.

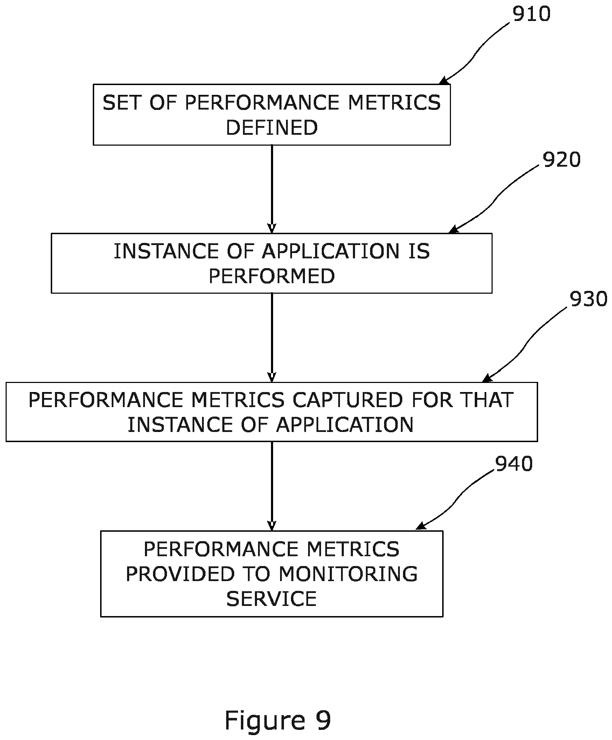

As will be described below, this approach is particularly suitable for measuring the performance of a mobile payment application used in connection with a banking infrastructure to achieve digitized card transactions. However, this is not the only application for this approach. For example, the approach indicated here could be employed for a mobile ticketing transaction that may or may not use a digitized card (and may not even require use of a payment infrastructure). Figure 9 describes a method of monitoring performance and interoperability of an application on a mobile computing device according to a further broad aspect of the disclosure. A set of performance metrics is defined 910 for the application. During an instance of performing the application 920, the performance metrics for that instance are captured 930. These performance metrics of that instance are then provided 940 to a monitoring service external to the mobile computing device.

While embodiments of this invention may relate to transactions carried out by a mobile payment application using a digitized card, this is not the only area of application for the invention. This approach can be used to provide analytics effectively for a wide range of mobile application functionality.

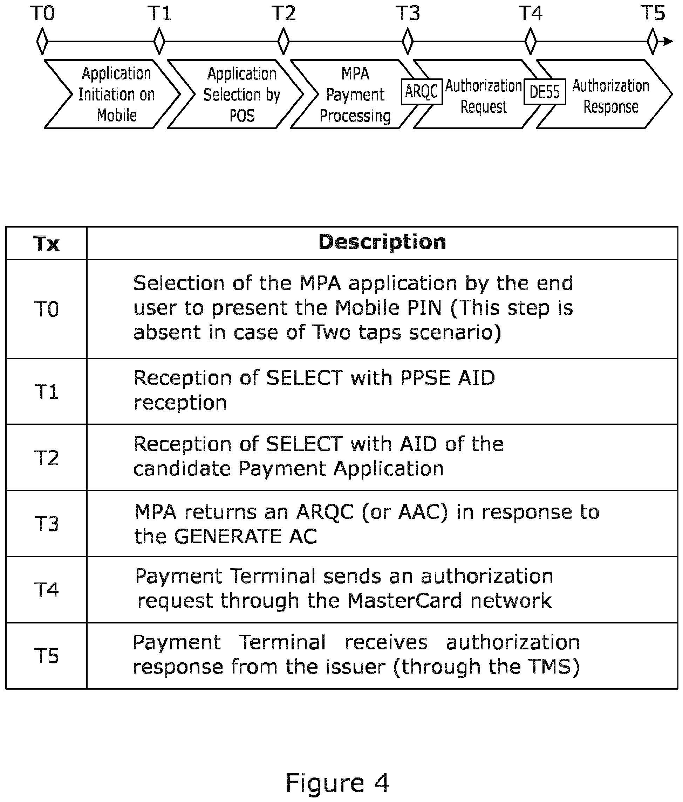

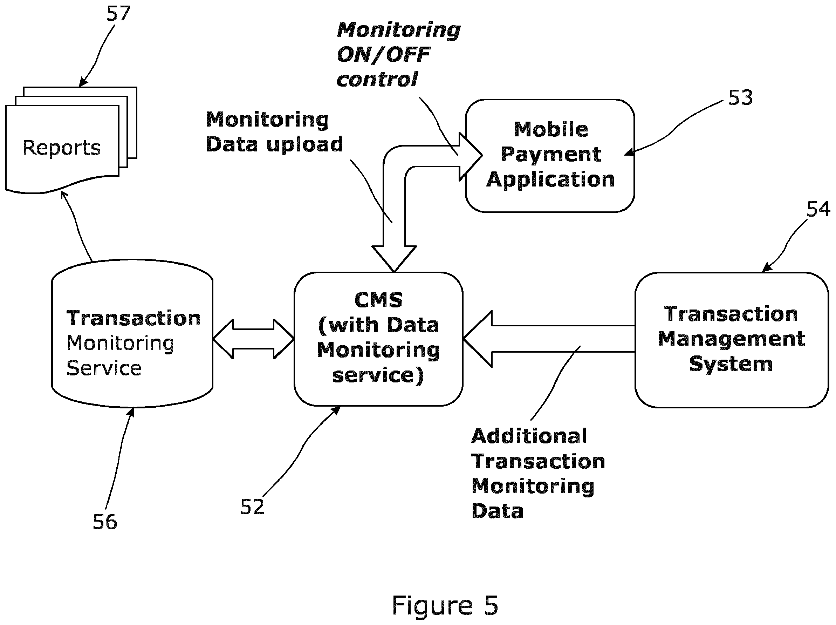

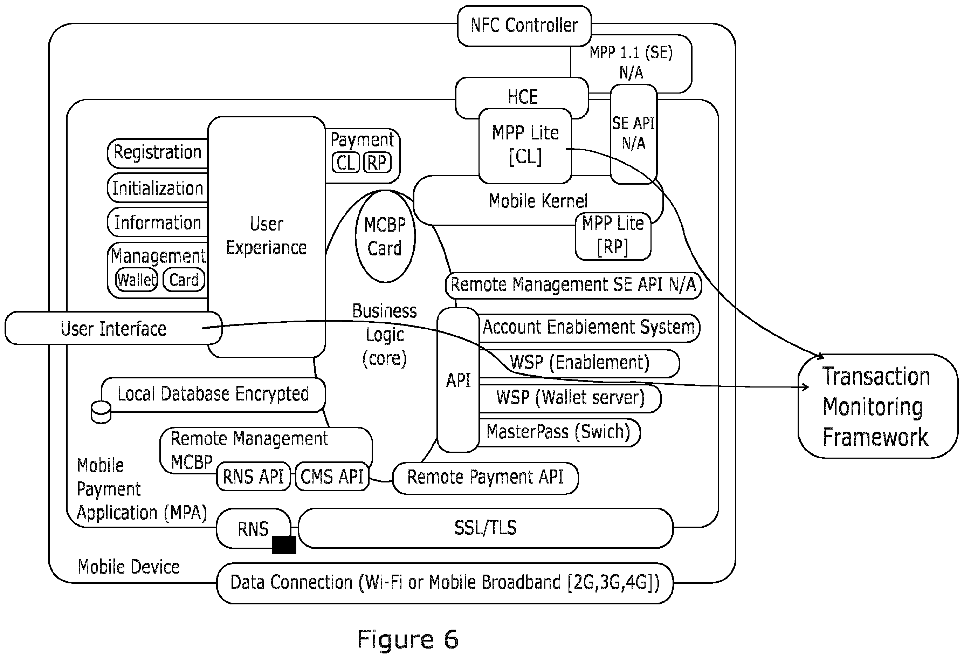

As will be noted from the discussion above, embodiments of the invention are not limited to monitoring of a mobile payment application. However, such embodiments are of particular interest to the present applicant and embodiments relating to the monitoring of a mobile payment application are discussed below. First of all, adaptation of a mobile payment system as shown in Figure 7 in accordance with embodiments of the invention is discussed with reference to Figure 5. Suitable performance metrics for a mobile payment application will then be discussed with reference to Figure 4. Modification of the mobile payment application functional structure as shown in Figure 8 to support monitoring in accordance with an embodiment of the invention is then shown in Figure 6.

Figure 5 illustrates how the approach described operates in the context of a digitized card transaction system as shown in Figure 7. The mobile payment application 53 and the transaction management system 54 are both essentially as shown in the Figure 7 arrangement, but have additional functionality to enable them to identify and capture performance metrics related to a transaction. The credentials management system 52 is similarly augmented with additional functionality to allow it to reconcile performance metric data for a transaction, and to provide it to a service acting as a transaction monitor 56. This transaction monitor 56 is a service, typically performed on an infrastructure server of the transaction system, that may provide analysis of performance metric data but will provide one or more reports 57 on the performance of transactions involving the mobile payment application 53.

As the skilled person will appreciate, a range of difference performance metrics may be chosen for measurement of any application. The following discussion relates to suitable performance metric choices for a mobile payment application adapted to make payments using a digitized card.

In determining metric choices, the potential benefits of transaction monitoring should be considered. The main intention will be to improve the service as a whole - this may be by improving the user experience or by improving the quality of service. In order to do this, it may be desirable to capture both qualitative and quantitative information.

Data privacy issues need to be considered. It will be desirable or may be essential (depending on the relevant legal and regulatory environment) for onward provision of certain transaction performance information to require clear user approval. It is therefore desirable for the user of the mobile device to be able to opt in or out of monitoring (as indicated in Figure 5) and to provide appropriate guidance to the user.

In order to determine performance metrics, one useful approach is to break the transaction itself down into a number of stages. Suitable stages for a mobile payment transaction using a digitized card are shown in Figure 4 - these stages take place between checkpoints T0 to T5. The duration of each stage or a group of stages (measured directly or derivable from measured checkpoint times) provides one potential subset of metrics. The individual stages identified are described below.

The first stage 41 relates to initiation of the application on the mobile device. This stage lasts from T0 to T1. Point T0 corresponds to selection of the mobile payment application by a user for presentation of a mobile PIN - this step may not be required if a PIN has been entered earlier to pre-authorise the application
- in this case a transaction is initiated simply by tapping the phone. Point T1 corresponds to reception of a SELECT command at the mobile payment application with the application identifier for the Proximity Payment Selection Environment (an EMVCo defined process for establishing contactless payment) - this is an indication that the POS terminal is also participating in the transaction. The time from T0 to T1 is somewhat user dependent, as it will be affected by the time taken by the user to tap the POS terminal.

The second stage 42 relates to selection of the payment application by the POS terminal. This lasts from T1 to T2. Point T2 corresponds to selection of a payment application by the POS terminal - this may be a selection from more than one possible alternative, or a selection of the mobile payment application as opposed to a rejection. This relates to Level 1 link establishment over NFC, which will be further discussed below.

The third stage 43 relates to payment processing by the mobile payment application, and lasts from T2 to T3. Point T3 corresponds to the stage at which the mobile payment application has taken its last processing step affecting the progress of the transaction - this may be generation of an application cryptogram (GENERATE AC R-APDU) or computation of a cryptographic checksum (COMPUTE CRYPTOGRAPHIC CHECKSUM R-APDU). As is discussed below, information on later stages is not provided by the mobile payment application - however, in addition to measurement of time stamps there may be a timeout timer for each stage to record if it lasts longer than a threshold value.

Time stamps T4 and T5 relate to payment (POS) terminal actions. The fourth stage 44 relates to processing of the transaction at the terminal for authorisation, ending at T4 when the authorisation request is sent to the payment infrastructure. The fifth stage 45 relates to the authorisation response, and ends at T5 when the payment terminal receives an authorisation response from the issuer through the TMS.

One metric that it would be desirable to capture is whether there has been a Level 1 establishment issue. One approach to determining this is for the mobile payment application to listen for Level 1 debugger activity. A call to the Level 1 debugger could then be logged, together with any associated failure code. Codes could relate to issues such as field detection, protocol establishment and anticollision.

The part of the transaction before T1 essentially relates to user interaction with the mobile payment application. In a conventional (one tap) transaction, the user will open the application and be asked to present a mobile PIN before tapping on to the POS terminal to progress a contactless transaction. The mobile payment application is easily adapted to provide a metric for this stage if reasons for failure are classified and captured for later upload - these reasons can include an absent or defective card profile, a missing transaction credential, or user cancellation.

Between T1 and T3, the mobile payment application interacts with the POS terminal. As the transaction type is contactless and online, the mobile payment application is not informed of the final success or failure of the transaction.

The mobile payment application is required to provide a notification at T3, and detection of a failure between T1 and T3 is again most easily handled by the mobile payment application. As shown in Figure 8, minor modification to the core payment functions 83 can achieve this by capturing the reason for failure. These reasons for failure can include the following:
- Level 1 communication lost (including the APDU command from which transaction failed)
- PPSE and Application Selection failure (SELECT PPSE): Command format issue; AID matching issue; Card Profile missing (in case of 2 tap); Transaction Credential missing (in case of 2 tap); Payment Application Selection failure (SELECT AID); Command format issue.
- GET PROCESSING OPTION failure: Command format issue; bad PDOL; Terminal is offline only; Risk Management failure,
- READ RECORD failure: Command format issue; Missing Record
- GENERATE AC failure: Command format; Missing parameters in Payment profile; Terminal requesting AAC; "Unsupported Transit" context (refer to [MCBPMPA] GAC.3.3); Context conflicting issue; Missing CDOL; Mobile Pin not presented (in case of 2 tap); Risk Management failure (CVR and CIAC),
- COMPUTE CRYPTOGRAPHIC CHECKSUM failure: Command format issue; Missing parameters in Payment profile; "Unsupported Transit" context (refer to [MCBPMPA] CCC.2.3); Context conflicting issue; Mobile Pin not presented (2 taps); Risk Management failure.

Another metric to capture is mobile PIN failure. In an exemplary arrangement, a mobile PIN is required for each transaction, the PIN having been previously established with the transaction system. The user enters the value when prompted by the mobile payment application and its value is used in the computation of keys and certain generated cryptograms. The PIN itself is not transmitted during a transaction but the cryptograms are, so validation of the cryptograms can establish that the correct PIN has been used, though this validation information is not returned to the user at the time of transaction, though can be fed back later by the TMS.

Various strategies are available to capture mobile PIN failure. One is to assume that the user will retry a transaction after a failed mobile PIN presentation, so same transaction details for consecutive transactions attempted by the mobile payment application suggest mobile PIN failure. Another possibility is detection of failures directly in the transaction network itself.

Transaction approval takes place outside the mobile payment application and would have to be monitored in the transaction network - it is essentially a process involving the POS terminal, the TMS and the Issuer (specifically, the Issuer Authorization Server). Relevant cryptograms are forwarded for validation
- this can fail if the mobile PIN is not valid (in which case at least one of the cryptograms will fail) or if there is a failure in payment cryptograms, or for certain other reasons. Such failures can be monitored by a modified TMS, with reporting back to the mobile payment application at a later stage if this is deemed desirable.

It may be desirable to capture information that provides not only relevant details of a transaction, but also the context of a transaction. Transaction location may be recorded by the mobile payment application - it can receive merchant name and location, terminal country code and terminal identification from the POS terminal, and may also record location by use of GPS in the mobile device.

Other merchant information can also be captured in a similar way - such information can include an acquirer identifier, an interface device serial number, a merchant category code and a merchant identifier. Information can be captured from the payment reader - the application version number, a terminal type, a kernel configuration and a kernel identifier. The mobile device may itself append mobile information - possibly the IMEI (though this may not be included on data privacy grounds) and the firmware version. For the mobile payment application itself, the application version number, an issuer identification number, an application currency code and an issuer country code may be recorded.

Transaction information can be included in the performance metric package - some of this information may be present in the mobile payment application, while other information elements could be expressly transmitted from the POS terminal to the mobile payment application at the end of the transaction. This information may include the amount authorized, the transaction currency code, the transaction date, time and type, and any terminal verification results.

User information may also be recorded and included, data privacy considerations permitting, but may not be needed if an anonymised approach is sufficient for effective monitoring. It is desirable even if data is anonymised for it to be secure, as some of the information included is sensitive or potentially sensitive.

In addition to these, there are other features that may be monitored. When a mobile PIN is entered at an earlier stage to allow a "two-tap" transaction, then this can be monitored. Replenishment of credentials needed for transactions, such as one-time-use keys, can be monitored too, along with other modes of use of the mobile payment application.

All data logged by the monitoring service should be encrypted, and logging data transmitted from the mobile payment application should be transmitted over a secure channel - preferably this logging data is then deleted from the mobile device.

Monitoring data can be uploaded from the mobile payment application at any suitable time. A particularly appropriate time is when the MPA and CMS are already to be in contact, such as for replenishment of single use keys.

The type of modification required to the mobile payment application is shown generally in Figure 6. Monitoring data as indicated above can be extracted partly through the user experience 87 (in particular, through the user interface) and partly through the core payment functions 83. This data is then routed to the transaction monitor 56.

The process steps associated with Figure 5 will now be described in more detail. If monitoring is turned on at the mobile payment application 53, logging information as described above will be carried out for each transaction. Relevant logging will also take place in the transaction management system 54. Both sets of monitoring data will then be forwarded to the CMS 52 at an appropriate time - the TMS 54 and CMS 52 are regularly in contact, whereas for the CMS 52 and mobile payment application 53 it has been noted that a particularly suitable time to upload logging data is when the CMS 52 replenishes the mobile payment application 53 with single use keys. The CMS 52 is augmented with a data monitoring service - this allows reconciliation of information from the mobile payment application 53 and the transaction management system 54 for specific transactions, and augmentation with any information present at the CMS 52 itself.

This information is then provided to a transaction monitoring service 56 that holds data in any suitable database structure and allows it to be analysed and so used to provide reports 57 as required.

As the person skilled in the art will appreciate, modifications and variations to the above embodiments may be provided, and further embodiments may be developed, without departing from the spirit and scope of the invention. Reference to standards and proprietary technologies are provided for the purpose of describing effective implementations, and do not limit the scope of the invention.

## Claims

1. A method of monitoring performance for transactions performed by a mobile computing device with a terminal of a transaction system, comprising a computer implemented monitoring service for a set of performance metrics related to the transactions, wherein for each transaction a plurality of transaction stages are defined:
for each of one or more transactions, receiving (330) values for a first set of performance metrics of the set of performance metrics for that transaction from the mobile computing device where values for the first set of performance metrics had been measured or recorded, the first set of metrics relating to transaction stages comprising interaction between the mobile computing device and the terminal with the first set of metrics comprising transaction timing and reasons for transaction failure, and receiving values for a second set of performance metrics of the set of performance metrics for that transaction from a transaction management system of the transaction system where values for the second set of performance metrics had been measured or recorded, the second set of performance metrics relating to stages of the transaction performed remotely from the mobile computing device; and
providing (340) a report on the set of performance metrics for said one or more transactions.

2. The method of claim 1, wherein the transaction system is a financial transaction system and the mobile computing device is a payment device.

3. The method of any preceding claim, wherein the set of performance metrics includes information relating to the performance of each transaction stage.

4. The method of any preceding claim, wherein the set of performance metrics includes metrics relating to one or more of the following: network performance, transaction authorisation, transaction values and a transaction context.

5. A monitoring service adapted to perform the method of any of claims 1 to 4, the monitoring service comprising a programmed processor to integrate performance metrics for transactions and to provide reports and a memory for storing sets of performance metrics for transactions.

6. A method of monitoring performance of a transaction performed on a mobile computing device with a transaction system, the mobile computing device using an application to interact with a terminal of the transaction system, wherein for each transaction a plurality of transaction stages are defined,
the mobile computing device having a first set of performance metrics for performance of a transaction, the first set of metrics relating to transaction stages comprising interaction between the mobile computing device and the terminal with the first set of metrics comprising transaction timing and reasons for transaction failure , the method comprising
in performing (920) a transaction, the application measuring or recording (930) values of the performance metrics of the first set of metrics for that transaction; and
the mobile computing device providing (940) the measured or recorded values of the performance metrics of the first set of performance metrics for that transaction to a monitoring service external to the mobile computing device for reconciliation with a second set of performance metrics relating to stages of the transaction performed remotely from the mobile computing device.

7. The method of claim 6, wherein the first set of performance metrics includes information relating to the performance of each transaction stage performed at the mobile computing device, the method comprising measuring the performance of each transaction stage during in performing the transaction.

8. The method of claim 6 or claim 7, wherein the measured or recorded values for the performance metrics of the transaction are uploaded together with performance metrics for other transactions in a scheduled interaction with the monitoring service.

9. The method of any of claims 6 to 8, wherein the application is a mobile payment application and wherein the transaction relates to a financial transaction.

10. The method of claim 9 wherein the financial transaction is performed between the mobile computing device and a terminal, wherein the first set of performance metrics includes information relating to the terminal involved in that transaction.

11. The method of claim 9 or claim 10 wherein the first set of performance metrics includes metrics relating to one or more of the following: network performance, transaction authorisation, transaction values and a transaction context.

12. A mobile computing device having a programmed processor adapted to perform the method of any of claims 7 to 11.

13. The mobile computing device of claim 12 where adapted to perform the method of any of claims 9 to 11, wherein the mobile computing device is a payment device adapted to transact using a digitized payment card.

14. The mobile computing device of claim 13, wherein the mobile computing device is adapted to perform a contactless transaction with a terminal, and wherein the set of performance metrics comprise metrics relating to networking between the mobile computing device and the terminal.

## Patentansprüche

1. Verfahren zur Überwachung der Leistung für Transaktionen, die durch eine mobile Rechenvorrichtung mit einem Terminal eines Transaktionssystems durchgeführt werden, das einen computerimplementierten Überwachungsdienst für einen Satz von die Transaktionen betreffenden Leistungskennzahlen umfasst, wobei für jede Transaktion mehrere Transaktionsstufen definiert sind:
für jede einer oder mehrerer Transaktionen, Empfangen (330) von Werten für einen ersten Satz von Leistungskennzahlen des Satzes von Leistungskennzahlen für diese Transaktion von der mobilen Rechenvorrichtung, wo Werte für den ersten Satz von Leistungskennzahlen gemessen oder aufgezeichnet wurden, wobei der erste Satz von Kennzahlen Transaktionsstufen betrifft, die eine Interaktion zwischen der mobilen Rechenvorrichtung und dem Terminal umfassen, wobei der erste Satz von Kennzahlen eine Zeitsteuerung der Transaktion und Gründe für ein Scheitern der Transaktion umfasst, und Empfangen von Werten für einen zweiten Satz von Leistungskennzahlen des Satzes von Leistungskennzahlen für diese Transaktion von einem Transaktionsmanagementsystem des Transaktionssystems, wo Werte für den zweiten Satz von Leistungskennzahlen gemessen oder aufgezeichnet wurden, wobei der zweite Satz von Leistungskennzahlen Stufen der Transaktion betrifft, die entfernt von der mobilen Rechenvorrichtung durchgeführt werden; und
Bereitstellen (340) eines Berichts über den Satz von Leistungskennzahlen für die eine oder mehreren Transaktionen.

2. Verfahren nach Anspruch 1, wobei das Transaktionssystem ein Finanztransaktionssystem ist und die mobile Rechenvorrichtung eine Zahlungsvorrichtung ist.

3. Verfahren nach einem vorangehenden Anspruch, wobei der Satz von Leistungskennzahlen Informationen beinhaltet, welche die Leistung jeder Transaktionsstufe betreffen.

4. Verfahren nach einem vorangehenden Anspruch, wobei der Satz von Leistungskennzahlen Kennzahlen beinhaltet, die eines oder mehrere der Folgenden betreffen:
Netzwerkleistung, Transaktionsautorisierung, Transaktionswerte und einen Transaktionskontext.

5. Überwachungsdienst, der dazu angepasst ist, das Verfahren nach einem der Ansprüche 1 bis 4 durchzuführen, wobei der Überwachungsdienst einen programmierten Prozessor zum Integrieren von Leistungskennzahlen für Transaktionen und Bereitstellen von Berichten und einen Speicher zum Speichern von Sätzen von Leistungskennzahlen für Transaktionen umfasst.

6. Verfahren zur Überwachung der Leistung einer Transaktion, die auf einer mobilen Rechenvorrichtung mit einem Transaktionssystem durchgeführt wird, wobei die mobile Rechenvorrichtung eine Applikation verwendet, um mit einem Terminal des Transaktionssystems zu interagieren, wobei für jede Transaktion mehrere Transaktionsstufen definiert sind,
wobei die mobile Rechenvorrichtung einen ersten Satz von Leistungskennzahlen für die Leistung einer Transaktion aufweist, wobei der erste Satz von Kennzahlen Transaktionsstufen betrifft, die eine Interaktion zwischen der mobilen Rechenvorrichtung und dem Terminal umfassen, wobei der erste Satz von Kennzahlen eine Zeitsteuerung der Transaktion und Gründe für ein Scheitern der Transaktion umfasst, wobei das Verfahren Folgendes umfasst:
dass beim Durchführen (920) einer Transaktion die Applikation Werte der Leistungskennzahlen des ersten Satzes von Kennzahlen für diese Transaktion misst oder aufzeichnet (930); und
dass die mobile Rechenvorrichtung die gemessenen oder aufgezeichneten Werte der Leistungskennzahlen des ersten Satzes von Leistungskennzahlen für diese Transaktion einem außerhalb der mobilen Rechenvorrichtung angesiedelten Überwachungsdienst bereitstellt (940), zwecks Abgleich mit einem zweiten Satz von Leistungskennzahlen, der Stufen der Transaktion betrifft, die entfernt von der mobilen Rechenvorrichtung durchgeführt werden.

7. Verfahren nach Anspruch 6, wobei der erste Satz von Leistungskennzahlen Informationen beinhaltet, welche die Leistung jeder Transaktionsstufe betreffen, die an der mobilen Rechenvorrichtung durchgeführt wird, wobei das Verfahren ein Messen der Leistung jeder Transaktionsstufe während des Durchführens der Transaktion umfasst.

8. Verfahren nach Anspruch 6 oder Anspruch 7, wobei die gemessenen oder aufgezeichneten Werte für die Leistungskennzahlen der Transaktion zusammen mit Leistungskennzahlen für andere Transaktionen in einer zeitlich geplanten Interaktion mit dem Überwachungsdienst hochgeladen werden.

9. Verfahren nach einem der Ansprüche 6 bis 8, wobei die Applikation eine Applikation für mobiles Bezahlen ist und wobei die Transaktion eine Finanztransaktion betrifft.

10. Verfahren nach Anspruch 9, wobei die Finanztransaktion zwischen der mobilen Rechenvorrichtung und einem Terminal durchgeführt wird, wobei der erste Satz von Leistungskennzahlen Informationen beinhaltet, die das an dieser Transaktion beteiligte Terminal betreffen.

11. Verfahren nach Anspruch 9 oder Anspruch 10, wobei der erste Satz von Leistungskennzahlen Kennzahlen beinhaltet, die eines oder mehrere der Folgenden betreffen:
Netzwerkleistung, Transaktionsautorisierung, Transaktionswerte und einen Transaktionskontext.

12. Mobile Rechenvorrichtung mit einem programmierten Prozessor, die dazu angepasst ist, das Verfahren nach einem der Ansprüche 7 bis 11 durchzuführen.

13. Mobile Rechenvorrichtung nach Anspruch 12, sofern dazu angepasst, das Verfahren nach einem der Ansprüche 9 bis 11 durchzuführen, wobei die mobile Rechenvorrichtung eine Zahlungsvorrichtung ist, die dazu angepasst ist, Transaktionen unter Verwendung einer digitalisierten Zahlungskarte zu realisieren.

14. Mobile Rechenvorrichtung nach Anspruch 13, wobei die mobile Rechenvorrichtung dazu angepasst ist, eine kontaktlose Transaktion mit einem Terminal durchzuführen, und wobei der Satz von Leistungskennzahlen Kennzahlen umfasst, die eine Vernetzung zwischen der mobilen Rechenvorrichtung und dem Terminal betreffen.

## Revendications

1. Procédé de surveillance de performances pour des transactions réalisées par un dispositif informatique mobile à l'aide d'un terminal d'un système de transaction, comprenant un service de surveillance implémenté par ordinateur pour un ensemble de mesures de performances liées aux transactions, une pluralité de phases de transaction étant définie pour chaque transaction :
pour chacune des transactions, la réception (330) de valeurs pour un premier ensemble de mesures de performances de l'ensemble de mesures de performances pour cette transaction en provenance du dispositif informatique mobile où des valeurs destinées au premier ensemble de mesures de performances ont été mesurées ou enregistrées, le premier ensemble de mesures concernant des phases de transaction comprenant une interaction entre le dispositif informatique mobile et le terminal, le premier ensemble de mesures comprenant un chronométrage de transaction et des raisons d'échec de transaction, et la réception de valeurs pour un second ensemble de mesures de performances de l'ensemble de mesures de performances pour cette transaction en provenance d'un système de gestion de transactions du système de transaction où des valeurs, destinées au second ensemble de mesures de performances, ont été mesurées ou enregistrées, le second ensemble de mesures de performances concernant des phases de la transaction réalisée à distance du dispositif informatique mobile ; et
l'établissement (340) d'un rapport sur l'ensemble de mesures de performances pour ladite au moins une transaction.

2. Procédé selon la revendication 1, dans lequel le système de transaction est un système de transaction financière et où le dispositif informatique mobile est un dispositif de payement.

3. Procédé selon l'une quelconque des revendications précédentes, dans lequel l'ensemble de mesures de performances comporte des informations concernant les performances de chaque phase de transaction.

4. Procédé selon l'une quelconque des revendications précédentes, dans lequel l'ensemble de mesures de performances comporte des mesures concernant au moins un des éléments suivants : des performances de réseau, une autorisation de transaction, des valeurs de transaction et un contexte de transaction.

5. Service de surveillance adapté pour réaliser le procédé selon l'une quelconque des revendications 1 à 4, le service de surveillance comprenant un processeur programmé pour intégrer des mesures de performances pour des transactions et pour établir des rapports et une mémoire permettant de stocker des ensembles de mesures de performances relatives à des transactions.

6. Procédé de surveillance des performances d'une transaction réalisée sur un dispositif informatique mobile à l'aide d'un système de transaction, le dispositif informatique mobile utilisant une application pour interagir avec un terminal du système de transaction, une pluralité de phases de transaction étant définie pour chaque transaction,
le dispositif informatique mobile ayant un premier ensemble de mesures de performances relatives aux performances d'une transaction, le premier ensemble de mesures concernant des phases de transaction comprenant une interaction entre le dispositif informatique mobile et le terminal, le premier ensemble de mesures comprenant un chronométrage de transaction et des raisons d'échec de transaction, le procédé comprenant
lors de la réalisation (920) d'une transaction, la mesure ou l'enregistrement (930), par l'application, de valeurs des mesures de performances du premier ensemble de mesures pour cette transaction ; et
la fourniture, par le dispositif informatique mobile (940), des valeurs mesurées ou enregistrées des mesures de performances du premier ensemble de mesures de performances relatives à cette transaction à un service de surveillance externe au dispositif informatique mobile, pour un rapprochement avec un second ensemble de mesures de performances concernant des phases de la transaction réalisée à distance du dispositif informatique mobile.

7. Procédé selon la revendication 6, dans lequel le premier ensemble de mesures de performances comporte des informations concernant les performances de chaque phase de transaction réalisée au niveau du dispositif informatique mobile, le procédé comprenant la mesure de la performance de chaque phase de transaction pendant la réalisation de la transaction.

8. Procédé selon la revendication 6 ou la revendication 7, dans lequel les valeurs mesurées ou enregistrées pour les mesures de performances de la transaction sont téléversées conjointement à des mesures de performances relatives à d'autres transactions selon une interaction ordonnancée avec le service de surveillance.

9. Procédé selon l'une quelconque des revendications 6 à 8, dans lequel l'application est une application de paiement mobile et dans lequel la transaction concerne une transaction financière.

10. Procédé selon la revendication 9, dans lequel la transaction financière est réalisée entre le dispositif informatique mobile et un terminal, le premier ensemble de mesures de performances comportant des informations concernant le terminal impliqué dans cette transaction.

11. Procédé selon la revendication 9 ou la revendication 10, dans lequel le premier ensemble de mesures de performances comporte des mesures concernant au moins un des éléments suivants : des performances de réseau, une autorisation de transaction, des valeurs de transaction et un contexte de transaction.

12. Dispositif informatique mobile ayant un processeur programmé adapté pour réaliser le procédé selon l'une quelconque des revendications 7 à 11.

13. Dispositif informatique mobile selon la revendication 12, lorsqu'il est adapté pour réaliser le procédé selon l'une quelconque des revendications 9 à 11, le dispositif informatique mobile étant un dispositif de paiement adapté pour réaliser une transaction à l'aide d'une carte de paiement numérisée.

14. Dispositif informatique mobile selon la revendication 13, le dispositif informatique mobile étant adapté pour réaliser une transaction sans contact avec un terminal, et l'ensemble de mesures de performances comprenant des mesures concernant un travail en réseau entre le dispositif informatique mobile et le terminal.
